# EUROPEAN PATENT APPLICATION

(11) **EP 1 770 971 A1**
(43) Date of publication of application: **04.04.2007**
(21) Application number: 06016812.7
(22) Date of filing: 11.08.2006
(51) Int. Cl.: H04M 1/725, G06F 21/00

(54) **Method for preventing unauthorized use of content data in a mobile terminal**

(30) Priority: 27.09.2005 KR 20050089870
(71) Applicant: Samsung Electronics Co., Ltd., Suwon-si, Gyeonggi-Do (KR)
(72) Inventor: Yoon, Jun, Yeongtong-gu Suwon-si Gyeonggi-do (KR); Ryu, Yeong-Moo, Yeongtong-gu Suwon-si Gyeonggi-do (KR); Kim, Hark-Sang, Yeongtong-gu Suwon-si Gyeonggi-do (KR)
(74) Representative: Lang, Johannes

(57) **Abstract**

Disclosed is a method for preventing unauthorized use of content data in a mobile terminal, which includes downloading content data to the mobile terminal and analyzing the downloaded content data, determining whether DRM (Digital Rights Management) for preventing unauthorized use of digital content is applied to the downloaded content data, checking identification information of a memory in which the content data will be stored if the content data is DRM applied, and inserting the identification information of the memory into the content data and storing the content data with the identification information.

## Description

### BACKGROUND OF THE INVENTION

### 1. Field of the Invention

The present invention relates to a method for management of content data, and more particularly to a method for preventing unauthorized use of content data when reproducing or managing the data in a mobile terminal.

### 2. Description of the Related Art

With the development of information and telecommunication technologies, mobile terminals have gone beyond merely being voice-only telephones and now integrate various additional functions, such as a short message service, a memory function for storing and searching for telephone numbers, a lock function, a camera function and an MP-3 (MPEG Audio Layer-3) file reproduction function. The current mobile terminals are configured to embed many multimedia application programs for implementing multimedia functions as well as the above additional functions. Thus, various types of content including text information, images, audio, and video data can be used in the mobile terminals.

Recently, high-performance mobile terminals having high picture quality and multimedia functions have become commercially available and include large-capacity memories.

The rapid development of the mobile communication environment has enabled data transmission between servers and mobile terminals through wire-line or wireless networks. Accordingly, users can download necessary data to their own mobile terminals in order to use various content data services. Particularly, they can receive and use diverse digital content through DMB (Digital Multimedia Broadcasting) services and Internet services.

Digital content is provided to the users who may pay to use the content. In this regard, DRM (Digital Rights Management) technologies based on an OMA (Open Mobile Alliance) standard have been introduced to prevent unauthorized distribution and coping of digital content. DRM offers a solution that supports creation, distribution, and management of digital content, including billing, payment collection, and copyright protection relating to the digital content. Basically, DRM allows free distribution of encrypted content between users. However, every user has to purchase right information in order to use the content. As a leading method for protecting content ownership and copyrights, DRM defines encrypted content and a rights object (RO) of the content. A domain is a group of terminals which are grouped on a network to share content with a single service provider (SP). The group of terminals can share an encryption key corresponding to the domain. Therefore, members of the domain know the encryption key. The SP manages subscription of a terminal to the domain and cancellation of the subscription.

However, encryption keys can be easily destroyed or rendered useless by some inappropriate methods. Particularly, there is no way to completely prevent a person who has obtained an RO on certain content to perform unauthorized copying and/or redistributing the content using the obtained encryption key. Moreover, certain users may release their the encryption key thus allowing others to copy and/or redistribute the content without a proper authorization.

### SUMMARY OF THE INVENTION

Accordingly, the present invention has been made to solve the above-mentioned problems occurring in the prior art, and an object of the present invention is to provide a method for preventing unauthorized use, storage, and/or reproduction of content data in a mobile terminal.

In accordance with an aspect of the present invention for accomplishing the above objects, there is provided a method for preventing unauthorized use of content data in a mobile terminal, which includes downloading the content data to the mobile terminal and analyzing the downloaded content data; determining whether a DRM (Digital Rights Management) for preventing unauthorized use of digital content is applied to the downloaded content data; checking identification information of a memory in which the content data will be stored if DRM of the content data is applied; and inserting the identification information of the memory into the content data and storing the modified content data including the identification information.

In accordance with another aspect of the present invention, there is provided a method for preventing unauthorized use of content data in a mobile terminal, which includes downloading the content data to the mobile terminal and analyzing the downloaded content data; determining whether a DRM (Digital Rights Management) for preventing unauthorized use of digital content is applied to the downloaded content data; checking identification information of a memory in which the content data will be stored if the content data is DRM applied; comparing the checked identification information of the memory with that inserted into the content data; and storing the content data if the checked identification information corresponds with the identification information inserted into the content data.

In accordance with still another aspect of the present invention, there is provided a method for preventing unauthorized use of content data in a mobile terminal, which includes analyzing the content data when one or ore keys corresponding to a request for reproduction of the content data is pressed; determining whether DRM (Digital Rights Management) for preventing unauthorized use of digital content is applied to the downloaded content data; checking identification information of a memory in which the content data will be stored if the content data is DRM applied; comparing the checked identification information of the memory with that inserted into the content data; and reproducing the content data if the checked identification information corresponds with the checked information inserted into the content data.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a mobile terminal according to the present invention;
FIG. 2 is a flow chart illustrating a process for preventing unauthorized use of content data in a mobile terminal according to the present invention;
FIG. 3 is a flow chart illustrating a process for preventing unauthorized storage of content data in a mobile terminal according to the present invention;
FIG. 4 is a flow chart illustrating a process for preventing unauthorized reproduction of content data in a mobile terminal according to the present invention;
FIGs. 5A and 5B are screen shots respectively illustrating information displayed to inform whether content data was stored or cannot be stored according to the present invention; and
FIGs. 6A and 6B are screen shots respectively displayed to inform whether content data can be reproduced according to the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein will be omitted when it may make the subject matter of the present invention unclear.

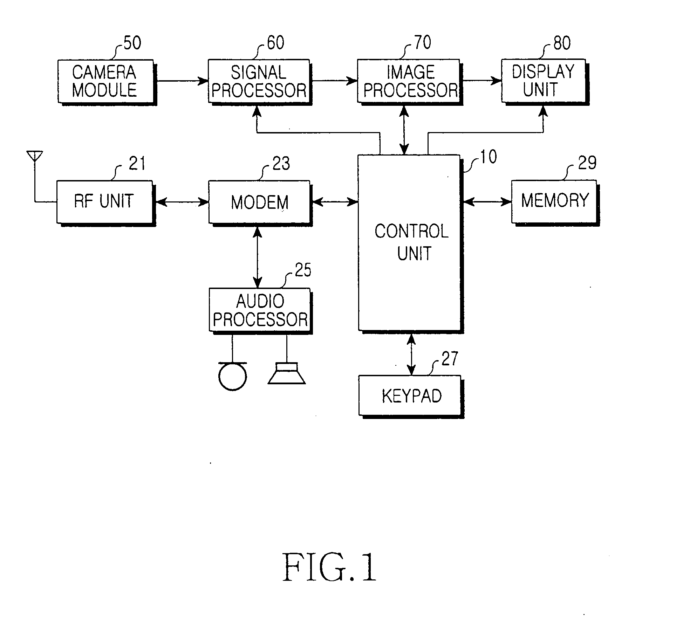

FIG. 1 is a block diagram illustrating of a mobile terminal according to of the present invention. Referring to FIG. 1, a radio frequency (RF) unit 21 performs a wireless communication function in the mobile terminal. The RF unit 21 includes an RF transmitter for upward converting and amplifying a signal to be transmitted and an RF receiver for amplifying and downward conversing a received signal.

A modem 23 includes a transmitter for coding and modulating a signal to be transmitted and a receiver for demodulating and decoding a received signal.

An audio processor 25 may include a CODEC that can include a data CODEC for processing packet data and an audio CODEC for processing an audio signal such as a speech signal. The audio processor 25 converts a digital audio signal received by the modem 23 into an analog signal and reproduces the analog signal through the audio CODEC. Also, the audio processor 25 converts an analog audio signal generated from a microphone into a digital audio signal through the audio CODEC and transfers the digital audio signal to the modem 23. The CODEC can be provided as an independent element or included in a control unit 10.

A keypad 27 (or other data input device) is provided with alphanumeric keys for inputting numbers and characters and/or function keys for setting up various functions. According to the present invention, the keypad 27 may include a content service implementing key, a content reproduction key and a selection key.

A memory 29 (e.g., RAM, ROM, FLASH MEMORY, etc.) may include a program memory and a data memory. The program memory stores programs for controlling general operations of the mobile terminal. In accordance with the present invention, the program memory also stores programs necessary to prevent unauthorized use of DRM (Digital Rights Management) applied content data when reproducing or managing the data. The data memory temporarily stores data generated during implementation of the above programs. The data memory also stores identification information (e.g., a unique ID) of the memory 29.

The control unit 10 controls the overall operation of the mobile terminal. The control unit 10 may include the modem 120 and the CODEC. When content data is downloaded to the mobile terminal, the control unit 10 analyzes the downloaded content data to determine whether DRM is applied to the content data. If the downloaded content data is DRM applied, the control unit 10 will first confirm identification information of the memory in which the content data will be stored, and then insert the confirmed identification information into the content data so as to store the content data with the identification information inserted with the content data. According to the present invention, when content data is downloaded or a reproduction key is pressed for reproducing the content data, the control unit 10 analyzes the content data to determine whether DRM is applied to the content data. If it is determined that the pertinent content data is DRM applied, the control unit 10 will confirm identification information of the memory in which the content data will be stored, and will compare the confirmed identification information with previous memory identification information inserted into the content data. If the identification information of the memory in which the content data will be stored is identical to (or corresponds with) the previous memory identification information inserted into the content data, the control unit 10 will then store or reproduce the content data as desired.

A camera module 50 is used to take image data. The camera module 50 includes a camera sensor for converting a photographed optical signal into an electric signal. The camera sensor can be a CCD (charge coupled device) sensor.

A signal processor 60 converts an image signal outputted from the camera module 50 into digital data. The signal processor 60 can include a DSP (digital signal processor).

An image processor 70 generates picture data for displaying an image signal output from the signal processor 60. The image processor 70 adjusts image signals received under the control of the control unit 10 to conform to variables, such as size and resolution so that the image is displayable on a display unit 80, and outputs the adjusted image data. The image processor 70 can also compress the image data and/or restore the compressed image data to the original image data. In addition, the image processor 70 transmits a start address value of the image data that is output to the display unit 80, or can change the start address value and send the changed value under the control of the control unit 10 to the display unit 80, as desired.

The display unit 80 displays image data outputted from the image processor 70. The display unit 80 can be an LCD (liquid crystal display) including an LCD controller, a memory for storing image data, and an LCD device. The display can also include a touch screenthat includes means to serve as an input section together with the keypad 27. The display unit 80 includes an image data display for outputting image data.

Referring to FIG. 1, if a user sets an outgoing call mode after dialing by using the keypad 27, the control unit 10 will detect the mode and will process the dialed information received through the modem 23. The control unit 10 converts the dialed information into an RF signal through the RF unit 21 and outputs the RF signal to be received by a recipient. A received reply signal generated from the recipient is detected by the RF unit 21 and the modem 23. The audio processor 25 can then form a voice communication path so that the user can communicate with the recipient.

When detecting an incoming call, the control unit 10 controls the audio processor 25 to generate a ringing signal or the like (e.g., a vibratory signal, etc.) When the user replies to the incoming call, the control unit 10 detects the reply and controls the audio processor 25 to form a voice communication path so that the user can receive the incoming call. Although voice communication in the incoming or outgoing call mode have been described, the control unit 10 can also perform data communication to receive and/or transmit various data such as packet data and/or image data. In a standby mode or messaging mode, the control unit 10 displays text data processed by the modem 23 on the display unit 80.

Hereinafter, the operations of the mobile terminal for preventing unauthorized use of content data when reproducing or managing the data will be explained in detail. When any content data is downloaded to the mobile terminal, the control unit 10 analyzes the downloaded content data to determine whether DRM is applied to the data. If the downloaded content data is DRM applied, the control unit 10 will control the memory 29 to confirm identification information of the memory in which the content data will be stored. The control unit 10 will insert the confirmed identification information (or information corresponding thereto) into the content data and store the content data with the identification information inserted. When any content data is downloaded or a reproduction key is pressed (or reproduction is requested), the control unit 10 will determine whether the content data is DRM applied. If the content data is DRM applied, the control unit 10 will control the memory 29 to compare identification information of the memory in which the content data will be stored with identification information inserted into the content data. If the identification information of the memory in which the content data will be stored is identical to that inserted into the content data, the control unit 10 will then store or reproduce the content data.

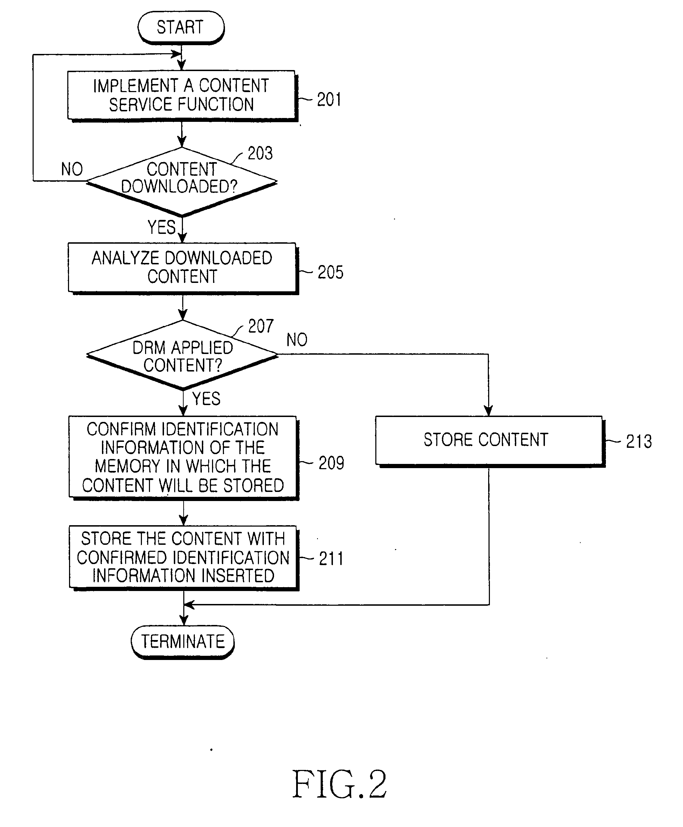

FIG. 2 is a flow chart illustrating a process for preventing unauthorized use of content data in a mobile terminal according to the present invention. The process in FIG. 2 will explain the operations for preventing unauthorized use of original content data which has been downloaded to the mobile terminal. When a user presses a content service implementing key provided on the keypad 27, the control unit 10 detects the key pressing in step 201 and implements content services corresponding to the request. For example, the user can receive multimedia broadcast content by implementing a DMB (Digital Multimedia Broadcasting) service function. The user can also receive multimedia content, such as text, image, and/or motion picture, by implementing an Internet service function.

When a request for downloading content data is sent to a content service provider (for example, a content data server or a TV station) through the content service implementation in step 201, the content service provider offers the requested content data to the user's mobile terminal and the RF unit 21 of the mobile terminal receives the content data. The control unit 10 detects the reception of the content data in step 203. The control unit 10 analyzes the received content data in step 205 and proceeds to step 207 in order to determine whether the received content data is DRM (Digital Rights Management) applied. Since the content data includes information for confirming the application of DRM, information for confirming original data, and content information, an analysis of the content data can reveal whether the content data is DRM applied content or original content (i.e., content data in which DRM is not currently applied).

In step 207. if it is determined that the received content data is DRM applied, the control unit 10 will proceed to step 209 in order to control the memory 29 to confirm identification information (which is preferably unique and can include for example, default information such as a serial number of a memory, etc., as desired) of the memory in which the content data will be stored. In step 211, the control unit 10 controls the memory 29 to store the content data with the identification information of the memory inserted.

However, if it is determined that the received content data is not DRM applied, the control unit 10 will proceed to step 213 in order to control the memory 29 to store the content data.

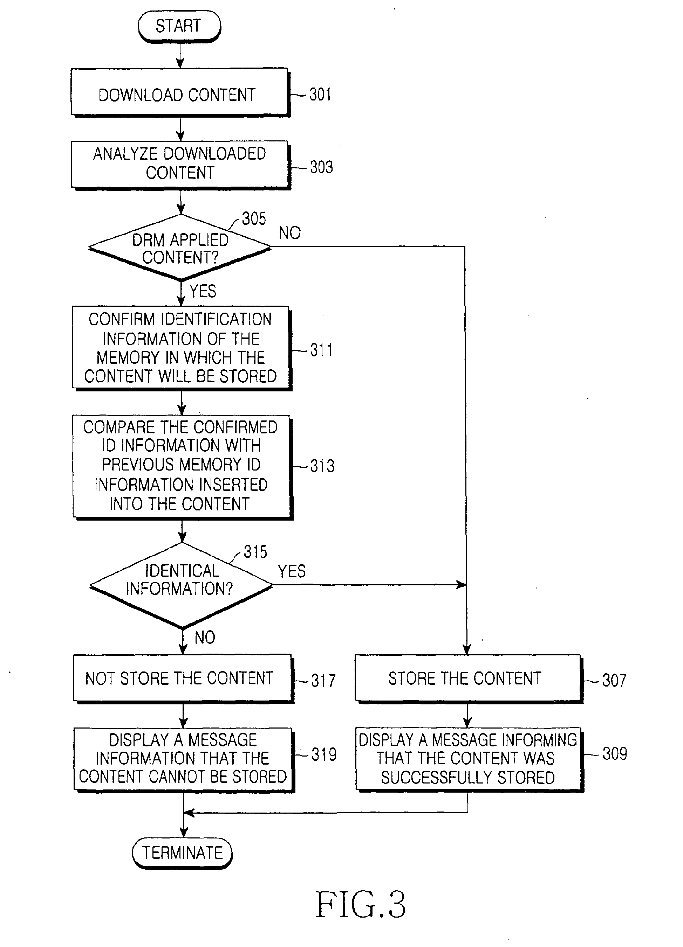

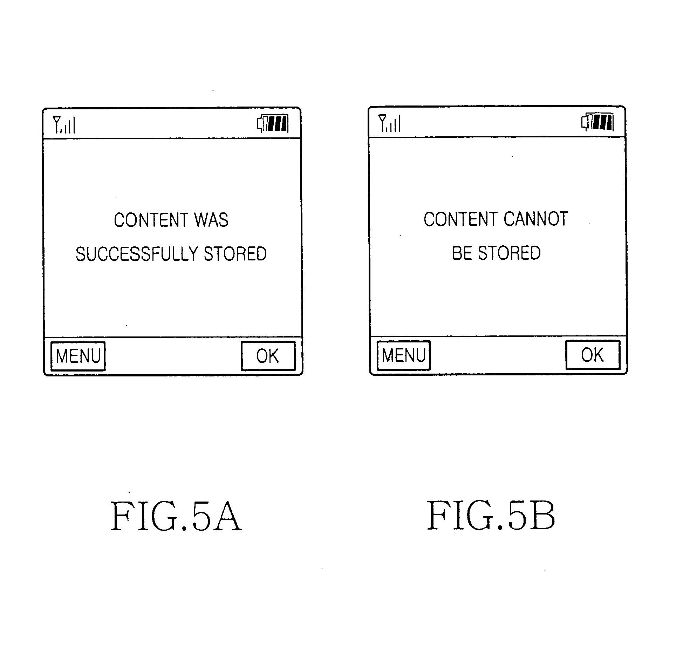

FIG. 3 is a flow chart illustrating a process for preventing unauthorized storage of content data in a mobile terminal according to the present invention; and FIGS. 5A and 5B are screen shots respectively illustrating information displayed to inform whether content data can be stored or not according to the present invention.

Referring to FIGs. 3, 5A and 5B, when the user inputs a request for downloading content from an external device (for example, a mobile device capable of short-range communication) through the keypad 27, the external device transfers the requested content data to the user's mobile terminal. The RF unit 21 of the mobile terminal receives the content data. The control unit 10 detects the reception of the content data in step 301. The control unit 10 analyzes the received content data in step 303 and proceeds to step 305 in order to determine whether the received content data is DRM applied. Since the content data includes information for confirming the application of DRM, information for confirming original data, memory identification information, and/or content information, an analysis of the content data can reveal whether the content data is DRM applied content or original content. Also, it is possible to confirm previous memory identification information inserted into the content data.

If it is determined that the received content data is not DRM applied, the control unit 10 will control the memory 29 to store the content data in step 307 and will proceed to step 309 in which the control unit 10 controls the display unit 80 to display a message informing that the content data was successfully stored, as illustrated in FIG. 5A.

If it is determined that the received content data is DRM applied, the control unit 10 will proceed to step 311 in which the control unit 10 controls the memory 29 so that identification information (for example, default information such as a serial number) of the memory in which the content data will be stored can be confirmed. In step 313, the control unit 10 controls the memory 29 to compare the confirmed identification information with identification information that is inserted into (or contained within) the content data. If it is determined that the identification information of the memory in which the content data will be stored is identical to the corresponding information that is inserted into the content data, the control unit 10 will proceed to step 307 in order to control the memory 29 to store the content data. Subsequently, in step 309, the control unit 10 controls the display unit 80 to display a message informing that the content data was successfully stored, as illustrated in FIG. 5A.

However, if the identification information of the memory in which the content data will be stored is not identical to the corresponding information that is inserted into the content data, the control unit 10 will proceed to step 317and operate so that the content data is not saved. For example, in step 317 the control unit can control the memory 29 not to store the content data, exit a saving or storing routine, clear information butters, etc., as required so that the content data is not saved. Subsequently, in step 319, the control unit 10 controls the display unit 80 to display a message informing that the content data cannot be stored and/or redistributed (or as otherwise desired), as illustrated in FIG. 5B.

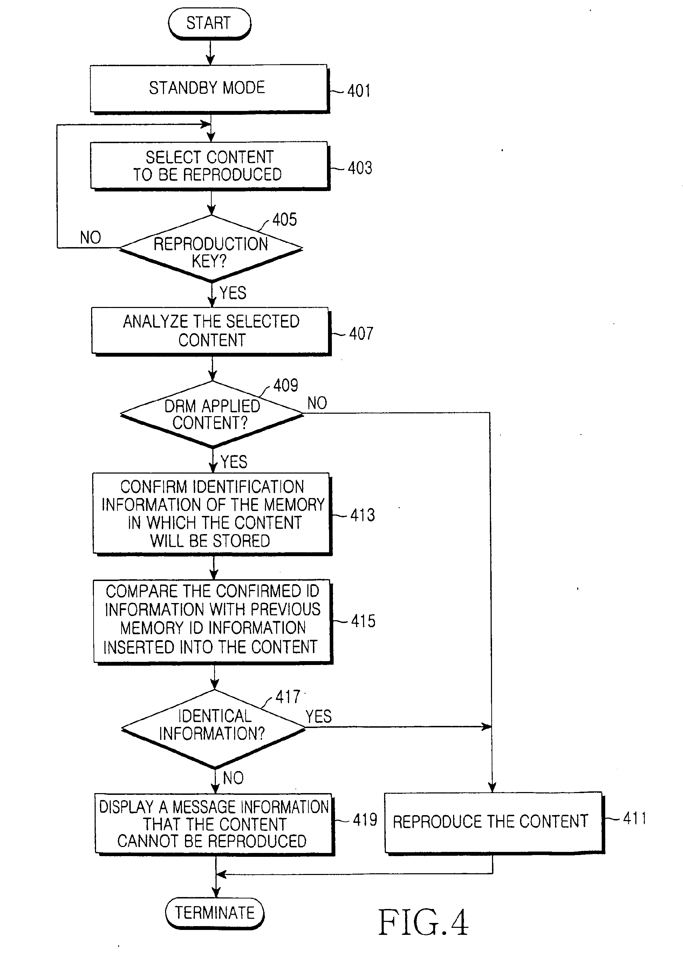

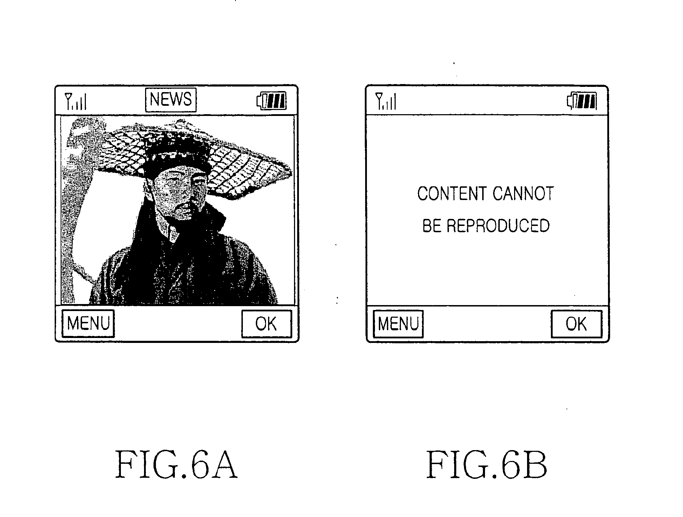

FIG. 4 is a flow chart illustrating a process for preventing unauthorized reproduction of content data in a mobile terminal according to the present invention. Figs. 6A and 6B are screen shots respectively displayed to inform whether content data can be reproduced or not according to the present invention.

Referring to FIGs. 4, 6A and 6B, when the user selects content to be reproduced using the keypad 27 in the standby mode in step 401, the control unit 10 detects the selection in step 403 and proceeds to step 405. At this time, the mobile terminal may provide a menu for displaying a list of previously stored contents so that the user can select desired content from the list by a key input or voice recognition.

When the user presses the reproduction key provided on the keypad 27 in order to reproduce the selected content, the control unit 10 detects the key pressing in step 405 and proceeds to step 407 in order to control the memory 29 to analyze the selected content. Then the control unit 10 proceeds to step 409 in order to determine whether the selected content data is DRM applied. Since the content data can include information for confirming the application of DRM, information for confirming original data, memory identification information, and/or content information, an analysis of the content data can reveal whether the content data is DRM applied content or original content. Also, it is possible to confirm previous memory identification information inserted into the content data.

If it is determined that that the selected content data is not DRM applied, the control unit 10 will proceed to step 411 in order to control the memory 29 and the display unit 80 to reproduce the content data as illustrated in FIG. 6A.

If it is determined that the selected content data is DRM applied, the control unit 10 will proceed to step 413 in order to control the memory 29 to confirm identification information (for example, default information such as a serial number) of the memory in which the content data will be stored. In step 415, the control unit 10 controls the memory 29 to compare the confirmed identification information of the memory with corresponding identification information that is inserted into the content data. If the identification information of the memory in which the content data will be stored is identical to that inserted into the content data, the control unit 10 will proceed to step 411 in order to control the memory 29 and the display unit 80 to reproduce the content data as illustrated in FIG. 6A.

However, if the identification information of the memory in which the content data will be stored is not identical to the identification information that is inserted into the content data, the control unit 10 will proceed to step 419 in order to control the memory 29 and/or the display unit 80 not to reproduce the content data. In step 419, the control unit 10 displays a message informing that the content data cannot be reproduced, as illustrated in FIG. 6B.

As described above, the present invention provides a method for preventing unauthorized use of DRM applied content data. This method can protect content against copyright violations and completely or substantially prevent illegal and/or distribution, coping and/or reproduction of DRM applied contents. Since unique ID information of the memory is used, a DRM function for preventing unauthorized use of content data can be implemented without any additional unit, such as a DRM generator module.

The memory according to the present invention can be a component included in a mobile terminal or a mobile memory. Content data can be real-time data. Also, the memory identification information can be either a unique ID of the memory or a code newly generated by combining various information in the memory.

Although preferred embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for preventing unauthorized use of content data in a mobile terminal, which comprises the steps of:
downloading the content data to the mobile terminal and analyzing the downloaded content data;
determining whether DRM (Digital Rights Management) for preventing unauthorized use of digital content is applied to the downloaded content data;
confirming, if the content data is DRM applied identification information of a memory for storing content data ; and
inserting the identification information of the memory into the content data and storing the content data with the identification information in the memory.

2. The method according to claim 1, further comprising storing the content data if the content data is not DRM applied.

3. The method according to claim 1, wherein said content data includes at least one of information for confirming the application of DRM and information for confirming original data.

4. The method according to claim 1, wherein said identification information of the memory includes default information provided in the memory.

5. A method for preventing unauthorized use of content data in a mobile terminal, which comprises the steps of:
downloading the content data to the mobile terminal and analyzing the downloaded content data;
determining whether DRM (Digital Rights Management) for preventing illegal, unauthorized use of digital content is applied to the downloaded content data;
confirming, if the content data is DRM applied, identification information of a memory for storing content data ;
comparing the confirmed identification information of the memory with identification information inserted into the content data; and
storing the content data if the confirmed identification information is identical to the identification information inserted into the content data.

6. The method according to claim 5, further comprising storing the content data if the content data is not DRM applied.

7. The method according to claim 5, further comprising outputting a message informing that the content data cannot be stored, without storing the content data, if the confirmed identification information does not correspond with the identification information inserted into the content data.

8. The method according to claim 5, wherein said content data includes at least one of information for confirming the application of DRM, information for confirming original data, memory identification information, and content information.

9. The method according to claim 5, wherein said identification information inserted into the content data includes previous identification information of the memory.

10. The method according to claim 9, wherein said identification information of the memory includes default information provided in the memory.

11. A method for preventing unauthorized use of content data in a mobile terminal, which comprises the steps of:
analyzing the content data when a key for reproduction of the content data is pressed;
determining whether DRM (Digital Rights Management) for preventing illegal, unauthorized use of digital content is applied to the content data;
confirming, if the content data is DRM applied, identification information of a memory for storing content data ;
comparing the confirmed identification information of the memory with identification information inserted into the content data; and
reproducing the content data if the confirmed identification information is identical to the identification information inserted into the content data.

12. The method according to claim 11, further comprising reproducing the content data if the content data is not DRM applied.

13. The method according to claim 11, further comprising outputting a message informing that the content data cannot be reproduced, without reproducing the content data, if the confirmed identification information does not correspond with the identification information inserted into the content data.

14. The method according to claim 11, wherein said content data includes information for confirming the application of DRM, information for confirming original at least one of data, memory identification information, and content information.

15. The method according to claim 11, wherein said identification information inserted into the content data includes previous identification information of the memory.

16. The method according to claim 15, wherein said identification information of the memory includes default information provided in the memory.
